# EUROPÄISCHE PATENTSCHRIFT

(11) **EP 1 007 179 B1**
(45) Veröffentlichungstag und Bekanntmachung des Hinweises auf die Patenterteilung: **24.07.2002**
(21) Anmeldenummer: 98941137.6
(22) Anmeldetag: 28.08.1998
(51) Int. Cl.: B01D 15/08, G01N 30/58, G01N 30/60

(54) **CHROMATOGRAPHIEVORRICHTUNG**
CHROMATOGRAPHY ASSEMBLY
DISPOSITIF DE CHROMATOGRAPHIE

(30) Priorität: 08.09.1997 AT 55497
(43) Veröffentlichungstag der Anmeldung: 14.06.2000
(73) Patentinhaber: Prior Separation Technology Gmbh, 6840 Götzis (AT)
(72) Erfinder: PRIOR, Adalbert, A-6841 Götzis (AT); WOLFGANG, Jürgen, A-6900 Bregenz (AT)
(74) Vertreter: Büchel, Kurt F.
(86) Internationale Anmeldenummer: AT9800205
(87) Internationale Veröffentlichungsnummer: WO9912625

(56) Entgegenhaltungen:
- EP-A- 0 371 648
- EP-A- 0 452 826
- US-A- 3 077 103
- US-A- 3 257 781
- US-A- 3 617 557
- US-A- 4 808 317

## Beschreibung

Die Erfindung betrifft eine Vorrichtung gemäß dem Oberbegriff von Anspruch 1. Eine derartige Vorrichtung ist in der Schrift US-A- 30 77 103 beschrieben.

Bei der Säulenchromatographie wird ein stehender Zylinder mit teilchenförmigem Material gefüllt und oben mit einem aufzutrennenden Komponentengemisch beschickt. Anschließend wird von oben her mit einem Lösungsmittel kontinuierlich eluiert - dabei werden die Komponenten aufgrund ihrer verschiedenen Affinität zum Teilchenmaterial proportional zur Fließgeschwindigkeit des Lösungsmittels (Eluens) getrennt und verlassen die Säule nacheinander.

Man unterscheidet zwischen der Verwendung eines einheitlichen Lösungsmittels (isokratische Fahrweise) und der Verwendung mehrerer verschiedener Lösungsmittel (Stufen- bzw. Gradientenfahrweise). Bei der Stufenfahrweise wird übergangslos das Lösungsmittel gewechselt, bei der Gradientenfahrweise der Anteil einzelner Lösungsmittel in einem Lösungsmittelgemisch über die Zeit verändert.

Bei dieser Elutionschromatographie werden die Komponenten einfach durch die Säule hindurchgewaschen; verwendet man hingegen im Eluens einen sogenannten Displacer, d.h. einen Bestandteil, der eine höhere Affinität zum Teilchenmaterial aufweist als alle vorher aufgegebenen Komponenten und diese daher verdrängt, spricht man von Verdrängungschromatographie, bei der gegenüber der Elutionschromatographie aufkonzentrierte Fraktionen erhalten werden, aber nicht alles der einzelnen Komponenten in reiner Form erhältlich ist (es werden immer auch Gemische erhalten).

Um kontinuierlich chromatographieren zu können, wurde die Annulare Chromatographie entwickelt, bei der eine Relativbewegung zwischen einem Teilchenbett in Form eines stehenden Zylindermantels und mindestens einer an dessen Kopf angeordneten Aufgabestelle für flüssiges Beschickungsmaterial vorgesehen ist, die einzelnen Komponenten in Spiralbahnen das Teilchenmaterial durchlaufen und entlang des unteren Zylindermantelumfangs in verschiedenen Umfangsbereichen gleichzeitig austreten. Sie kann z.B. als HPLC, Elutions- oder Verdrängungschromatographie angewendet werden und wird vor allem isokratisch gefahren. Die kontinuierliche annulare Chromatographie wird international mit CAC abgekürzt.

Dabei sind für die CAC sowohl Vorrichtungen bekannt, bei denen das Teilchenbett stillsteht, als auch solche, bei denen das Teilchenbett gegenüber Aufgabestelle(n) und Auffangstellen rotiert. Als Beispiel einer Literaturstelle, die Vorrichtungen des zweiten Typs, die durch vorliegende Erfindung weiterentwickelt werden sollen, im Detail beschreibt sowie einen Überblick über die verschiedensten chromatographischen Methoden bietet, wird neben der vorzitierten Schrift US-A- 30 77 103 auch die EP-A 371 648 der Union Oil of California genannt.

Ziel der Erfindung ist vor allem Kontaminationen durch die Umgebung unempfindlich zu machen, insbesondere ein, den Abfluß vom Teilchenbett in die Auffangstellen zu verbessern.

Dazu wurde die Vorrichtung gemäß Anspruch 1 entwickelt.

Dabei sind die sonst üblichen Abführstutzen für die aus der CAC-Säule austretenden Fraktionen als Kanäle in der Flüssigkeitsaustrittszone der Teilchenbettummantelung ausgebildet - mit anderen Worten sind in der Flüssigkeitsaustrittszone der Teilchenbettummantelung unterhalb des Teilchenbetts zumindest im wesentlichen parallel zur Axialrichtung des Teilchenbetts in Richtung Auffangring verlaufende Flüssigkeitskanäle vorgesehen.

Vorteilhaft ist zusätzlich, wenn die Kammern einen nach außen abfallenden Boden aufweisen und zwischen Teilchenbett und Flüssigkeitskanälen ein flüssigkeitsdurchlässiger Bettmaterialrückhaltestreifen, insbesondere aus porösem Kunststoff, vorgesehen ist.

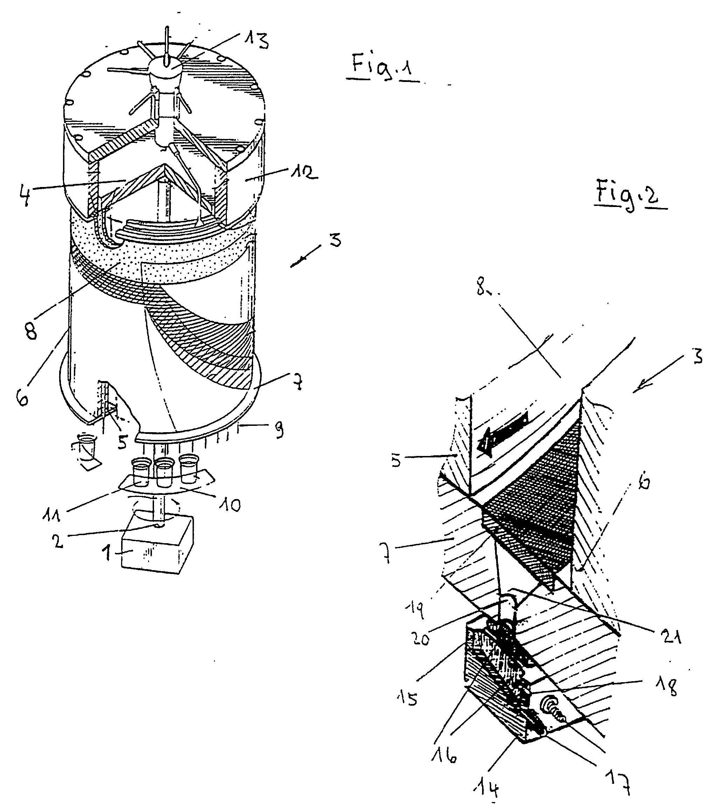

Die Erfindung wird nachstehend anhand eines Ausführungsbeispiels unter Bezugnahme auf die Zeichnung näher erläutert, in der die Figuren 1 und 2 jeweils teilweise geschnittene Schrägansichten sind, worin Fig. 1 den Stand der Technik gemäß der EP-A 371 648 zur Erläuterung der Funktion der CAC mit rotierendem Teilchenbett wiedergibt und die Fig. 2 ein erfindungsgemäßes Beispiel, wobei gleiche Bauteile gleiche Bezugszeichen tragen.

Aus Fig. 1 erkennt man, daß auf einem Support 1 ein über eine in Pfeilrichtung (Gegenuhrzeigersinn) angetriebene Drehachse 2 zylindrischer Rotationskörper 3 aufsitzt, der einen ein Kegeldach 4 aufweisenden Innenmantel 5 und einen oben offenen Außenmantel 6 aufweist, die auf einer Bodenplatte 7 aufsitzen. Zwischen Innenmantel 5 und Außenmantel 6 befindet sich eine zylindermantelförmige Bettschüttung 8 aus teilchenförmigem Material, z.B. einem geeigneten lonentauscherharz. Die Bodenplatte 7 weist im Bettbereich Bohrungen auf, die Abgabestutzen 9 für die Bettschüttung nach unten passierende Flüssigkeit aufweisen, die von den Abgabestutzen 9 in auf einer unverdrehbaren Ringplattform 10 abgestellte Auffangbehälter 11 abfließt.

Oberhalb des Rotationskörpers 3 befindet sich eine ebenfalls unverdrehbare Materialzufuhrkappe 12 mit Zentralzufuhr 13, über die einerseits Lösungsmittel als Materialtransportvehikel mittig auf das Kegeldach 4 des Innenmantels 5 und anderseits peripher am Kopf der Bettschüttung über den Bettumfang verteilt an gewissen Punkten aufzutrennendes flüssiges Stoffgemisch und an anderen Punkten Behandlungsmittel, wie z.B. Verdrängersubstanzen eingebracht werden. Die einzelnen Fraktionen laufen durch die Bettschüttung in gekrümmten Bahnen, bevor sie unten aus der Bettschüttung austreten.

Fig. 2 zeigt einen Ausschnitt aus einer erfindungsgemäßen Konstruktion, der das untere Ende des Rotationskörpers 3 zeigt und wobei die gleichen Bezugszeichen wie in Fig. 1 verwendet sind. Gegenüber Fig. 1 ist die Drehrichtung gemäß Pfeil umgekehrt, dies macht aber sachlich keinen Unterschied. Die Bodenplatte 7 sitzt gleitend auf einem Auffangring 14 auf, der der Ringplattform 10 in Fig. 1 entspricht und entlang seines Umfangs durch Radialwände 15 getrennte Kammern 16 aufweist, die den Auffangbehältern 11 in Fig.1 entsprechen, einen zum Außenumfang des Auffangrings 14 hin abfallenden Boden aufweisen und in Abführstutzen 17 münden. Mit 18 ist eine Druckausgleichöffnung bezeichnet, die beim sterilen Arbeiten mit einer Sterilfiltermembran abgedeckt wird:

Die Bettschüttung 8 ist lediglich angedeutet - die Bodenplatte 7 weist einen zentralen Bettmaterialrückhaltestreifen in Form einer Filtermaterialbahn 19 auf, durch die hindurch aus der Vorrichtung austretende, fraktionierte Flüssigkeit über Flüssigkeitskanäle 20 in die Kammern 16 abfließt. Aus Fig.2 erkennt man, daß die Breite des Bettmaterialrückhaltestreifens jeweils ein vielfaches des Durchmessers des Flüssigkeitskanals 20 beträgt und unterhalb des Bettmaterialrückhaltestreifens ein Keilraum 21 als Übergang zum Flüssigkeitskanal 20 vorgesehen ist. Beide Maßnahmen dienen zur gleichmäßigen Verteilung der aus dem Bett austretenden Flüssigkeit unabhängig davon, ob nach einem weiteren Merkmal - das bei allen CAC-Vorrichtungen anwendbar ist - das Bettmaterialvolumen durch Verwendung von Innenmänteln 5 verschiedenen Durchmessers variiert wird. Der Bettmaterialrückhaltestreifen besteht aus einem dem Beschickungsmaterial angepaßtem Material, z.B. Metall bei organischem Lösungsmittel, poröser Kunststoff bei saurem pH und poröse Keramik im alkalischen Bereich.

Vorzugsweise weisen die Oberseite des Auffangrings 14 und/oder die Unterseite der Bodenplatte 7 im Kontaktbereich eine reibungsvermindernde Beschichtung auf.

## Patentansprüche

1. Vorrichtung zur kontinuierlichen annularen Chromatographie von flüssigem Beschickungsmaterial, mit einem zwischen Innenmantel (5) und Aussenmantel (6) eines Rotationskörpers (3) angeordneten Teilchenbett (8) in Form eines stehenden Zylindermantels, welches gegenüber mindestens einer Aufgabestelle für das flüssige Beschickungsmaterial sowie einem Auffangring (14) für aus dem Teilchenbett austretende Fraktionen des Beschickungsmaterials rotierbar ist, wobei unterhalb des Teilchenbetts (8) Flüssigkeitskanäle (20) vorhanden sind, die im wesentlichen parallel zur Axialrichtung des Teilchenbetts (8) verlaufen und sich in Richtung Teilchenbett erweitern, und wobei der Auffangring (14) entlang seinem Umfang Auffangstellen in Form von durch Radialwände (15) getrennte Kammern (16) mit Flüssigkeitsableitung aufweist,
**dadurch gekennzeichnet, daß** der Rotationskörper (3) eine an das Teilchenbett (8) anschliessende Bodenplatte (7) aufweist, welche gleitend auf dem Auffangring (14) sitzt und in der die Flüssigkeitskanäle (20) angeordnet sind, die sich zu jeweils einem Keilraum (21) erweitern, und daß jede Kammer (16) eine Druckausgleichsöffnung (18) aufweist.

2. Vorrichtung nach Anspruch 1, **dadurch gekennzeichnet, dass** die Kammern (16) einen zum Außenumfang des Auffangrings (14) hin abfallenden Boden aufweisen und in Abführstutzen (17) münden.

3. Vorrichtung nach Anspruch 1 oder 2, **dadurch gekennzeichnet, daß** zwischen Teilchenbett (8) und Flüssigkeitskanälen (20) ein flüssigkeitsdurchlässiger Bettmaterialrückhaltestreifen (19), insbesondere aus Metall, porösem Kunststoff, oder Keramik vorgesehen ist.

## Claims

1. Assembly for continuous annular chromatography of a liquid feed having a particle bed (8) in the shape of an upright cylinder jacket which is arranged between inner jacket (5) and outer jacket (6) of a rotating body (3) and can be rotated relative to at least one feed point for the liquid feed and relative to a collection ring (14) for fractions of the feed leaving from the particle bed, wherein liquid channels (20) are present beneath the particle bed (8) which run essentially parallel to the axial direction of the particle bed (8) and widen in the direction of the particle bed, and where the collection ring (14) along its outer periphery has collection points in the shape of chambers (16) separated by radial walls (15) and provided with liquid drains,
**characterized in that** the rotating body (3) has a bottom plate (7) adjoining the particle bed (8) which rests slidingly on the collection ring (14) and in which the liquid channels (20) are arranged which each widen to a wedge-shaped space (21), and **in that** each chamber (16) has an opening (18) for pressure equalization.

2. Assembly according to claim 1, **characterized in that** the chambers (16) have a bottom sloping down toward the outer periphery of the collection ring (14) and terminate in outlet sockets (17).

3. Assembly according to claim 1 or 2, **characterized in that** between particle bed (8) and liquid channels (20) a liquid-permeable bed-material-retaining band (19) consisting in particular of metal, porous plastic or ceramic is provided.

## Revendications

1. Dispositif de chromatographie annulaire continu d'un matériau de chargement liquide, avec un lit de particules (8) disposé entre l'enveloppe intérieure (5) et l'enveloppe extérieure (6) d'un corps de révolution (3), lit se présentant sous la forme d'une enveloppe cylindrique stationnaire, susceptible d'être mise en rotation par rapport au moins à un point de fourniture de matériau de chargement liquide, ainsi qu'avec un anneau de captage (14) pour des fractions, sortant du lit de particules, du matériau de chargement, des canaux à liquide (20) étant prévus au-dessous du lit à. particules (8), canaux s'étendant sensiblement parallèlement à la direction axiale du lit à particules (8) et allant en s'élargissant dans la direction allant vers le lit à particules, et l'anneau de captage (14) présentant le long de sa périphérie des points de captage sous la forme de chambres (16) séparées par des parois radiales (15), avec une évacuation de liquide,
**caractérisé en ce que** le corps de révolution (3) présente une plaque de fond (7) se raccordant au lit à particules (8), qui est posée de façon glissante sur l'anneau de captage (14) et dans laquelle sont disposés les canaux à liquide (20) qui vont en s'élargissant chacun vers un espace cunéiforme (21), et **en ce que** chaque chambre (16) présente une ouverture d'équilibrage de pression (18).

2. Dispositif selon la revendication 1, **caractérisé en ce que** les chambres (16) présentent un fond allant en descendant vers la périphérie extérieure de l'anneau de captage (14) et débouchant dans des tubulures d'évacuation (17).

3. Dispositif selon la revendication 1 ou 2, **caractérisé en ce qu'**une bande de retenue de matériau de lit (19), perméable aux liquides, en particulier en métal, en matière synthétique poreuse ou en céramique, est prévue entre le lit à particules (8) et les canaux à liquide (20).
